# EUROPEAN PATENT APPLICATION

(11) **EP 1 380 496 A1**
(43) Date of publication of application: **14.01.2004**
(21) Application number: 02015188.2
(22) Date of filing: 08.07.2002
(51) Int. Cl.: B62D 29/04, B62D 29/00, B62D 31/00, B62D 65/00, B62D 24/00, B62D 33/06

(54) **Car structure comprising a cab shell made in one piece of a light material**

(71) Applicant: ET S.r.l., 56031 Bientina (PI) (IT)
(72) Inventor: Luppichini, Michele, 56124 Pisa (IT)
(74) Representative: Celestino, Marco

(57) **Abstract**

A vehicle cockpit (1) comprises a roof (2), a footplate (3), at least a seat (4), a front face (5), a rear wall (6), a seat back (7) and two apertured side walls for receiving the doors not shown. The cockpit (1) has furthermore, apertures (8) and (9) respectively for application of the a windscreen and for lighting devices not shown. The cockpit (1) is made of a single part of polymeric thermoplastic material, having thus a high uniformity without zone of structural weakness. A support structure (10) associated to the cockpit (1) provides the necessary mechanical resistance to the vehicle and has a reticular configuration consisting in a plurality of shaped elements (11) that extend along longitudinal planes, to which transversal stiffening elements (12, 14, 16, 19) are connected. The frame (20), to which the support structure (10) is fastened, comprises a rear portion (21) and a front portion (22), which is bent downwards with respect to the rear portion (21) for receiving the support structure (10).

## Description

### Field of the invention

The present invention relates to the field of car production, and precisely it relates to a car structure comprising a cockpit and a frame.

Furthermore, the invention relates to a method for the production of a vehicle, with particular reference to the production of the cockpit and of its fastening to the frame.

### Background of the invention

Car production is always involved with research efforts. Among these the search is directed towards new innovative light materials for car body making.

In particular, the possibility to provide car bodies made of light material such as special aluminium alloys or plastic material is advantageous concerning the costs of production, that affect the final costs for the consumers. Furthermore, with plastic there are less problems of corrosion of the body. A further advantage is the fuel consumption reduction owing to a reduction of the overall weight of the vehicle.

In a first period, the weight of single components of the car have been reduced, for example, by making of plastic parts that are integral to a traditional base metal structure, such as the bonnet or the doors or the under-body footrest or the canopy of the car. In this case, the actual weight reduction obtained is negligible and furthermore, the problem was felt of assembling together parts made of different material, with linkages that represent weak points of the structure.

Then, car structures have been proposed (see US 5660427 and EP 399648) made assembling a plurality of plastic boards kept together by special adhesives or by welding. In this case, the structure of the car body has weak points at the connection of the boards and then, for safety reasons, heavy metal reinforcements are necessary that not only increase the weight but affect the behaviour against corrosion of the reinforced zone. In addition, the boards are made using different moulds with subsequent high costs of production.

A further possibility provides the use of a metal support structure to which the parts of the car body made of light material are connected. However, also in this case, the metal support structure causes unavoidably an increase of the overall weight of the car.

In conclusion, then, the car body structures proposed up to now made of light material have substantial problems versus structural resistance and performances.

### Summary of the invention

It is therefore object of the present invention to provide a car structure of light material that has not weak structural zones assuring safety like traditional vehicles.

It is another object of the present invention to provide a car structure that has low costs of production.

It is a first particular object of the invention to provide a structure of cockpit of a car that is light, can be integrated easily to the frame and matches safely with doors and other parts.

It is another particular object of the invention to provide a support of connection between cockpit and frame of the vehicle.

It is a further object of the invention to provide a frame suitable for receiving such a cockpit.

These and other objects are obtained by the vehicle, according to the present invention, characterised in that it comprises a single part cockpit made of light material, a frame and a support structure arranged between said cockpit and said frame.

Alternatively, the support structure is integrated to the cockpit during the production phase.

Preferably, the single part cockpit is made of plastic material with a process of moulding. Therefore, the single part cockpit has not structural weakness like welding connections or the like. Furthermore, the cockpit has a high structural resistance, owing to its uniformity, with safety advantages for the passengers in case of accident.

Preferably, the moulding process for making the cockpit is of rotational type.

In particular, the single part cockpit comprises a roof, a footplate, at least a seat, a front face, a rear wall and two side walls, as well as at least an opening for connecting the inside of the cockpit with the outside.

In particular, at least a side wall can be associated to a door, whereas apertures can be present on the front face and on the rear wall for receiving windows and a windscreen.

Preferably, the single part cockpit is made of plastic, in particular polymeric thermoplastic material such as, for example, polyethylene, poly-propylene, PVC, polyamide, polycarbonate, polyurethane, PET. Such material can be mixed at moulding or overlapped as layers with reinforcing agents, such as foams, like polyurethane foams, fibres, like short glass fibres, fillers, like mineral fillers.

Advantageously, the support structure arranged between the cockpit and the frame of the car has a reticular configuration comprising a plurality of metal shaped elements that extend along longitudinal planes to which transversal reinforcement means are connected for the support structure same at the seat back, seat, footplate, front part of the cockpit. Other reinforcement means can be arranged also at the upper part of the cockpit.

Advantageously, the support structure is engaged with the cockpit and connected to it by fastening means comprising transversal elements integral to said support structure that engage said cockpit from outside, associated to plate elements in said cockpit coupled like a sandwich and at least at the height of the seat back, of the footplate and of the seat of the cockpit.

Furthermore, for fastening at least a seat belt the support structure can provide fastening means connected to said transversal reinforcement means.

Preferably, the support structure is made of light material, for example aluminium.

The support structure can be connected to the frame of the car by means of a positive engagement, or by means of screws, rivets or rubber bushings.

Advantageously, the frame comprises a rear portion and a front portion, the latter being bent downwards with respect to the rear portion for receiving said support structure. In a preferred embodiment, the front portion is bent downwards to form a first step portion at the seat of the cockpit and a second step portion lower than the first for supporting the cockpit footplate after interposition of the support structure.

Furthermore, to the rear portion of the frame a charging platform can be associated behind the cockpit for carrying objects or people.

### Brief description of the drawings

Further characteristics and the advantages of the invention will be made clearer with the following description of an embodiment thereof, exemplifying but not limitative, with reference to the attached drawings, wherein:
- figure 1 shows a perspective view of a cockpit of a car, according to the invention;
- figure 2 shows a perspective view of a support structure of a car, according to the invention;
- figure 3 shows a perspective view of a front portion of a car frame according to the invention;
- figure 4 shows a perspective exploded view of a front part of a car formed by the cockpit, support structure and frame of figures 1, 2 and 3;
- figure 5 shows the support structure of figure 2 with stiffening plates separated from respective matching plates;
- figure 6 shows a cross sectional view of a demountable coupling between a plate, a respective matching plate and a portion of the cockpit;
- figure 7 shows a perspective view of an alternative embodiment of the support structure of figure 2, associated to the front portion of the frame.

### Description of a preferred embodiment

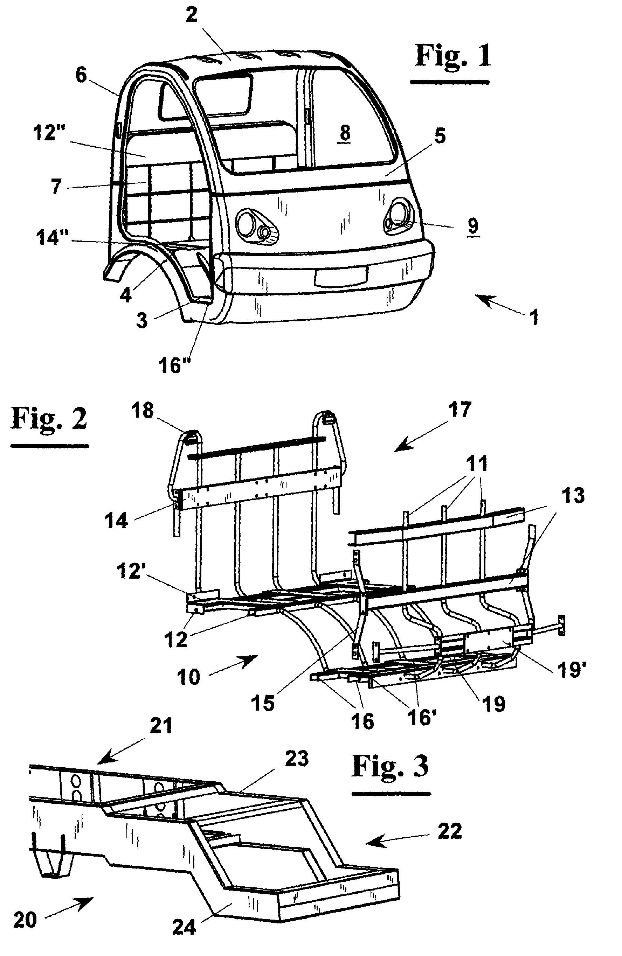

With reference to figure 1 a cockpit 1 comprises a roof 2, a footplate 3, at least a seat 4, a front face 5, a rear wall 6, a seat back 7 and two apertured side walls for receiving the doors not shown. Cockpit 1 has furthermore, apertures 8 and 9 respectively for application of a windscreen and of lighting devices not shown.

According to the invention, cockpit 1 is made of a single part of polymeric thermoplastic material, having a high uniformity and without weakness structural zones.

Preferably, cockpit 1 is obtained with a rotational moulding technique, not shown in detail since known to a skilled person.

In figure 2 a perspective view is shown of support structure 10 associated to cockpit 1, which provides a mechanical resistance to the vehicle. Support structure 10 presents, in particular, a reticular configuration consisting in a plurality of shaped elements 11 that extend along longitudinal planes, to which transversal stiffening elements 12, 14, 16, 19 are connected.

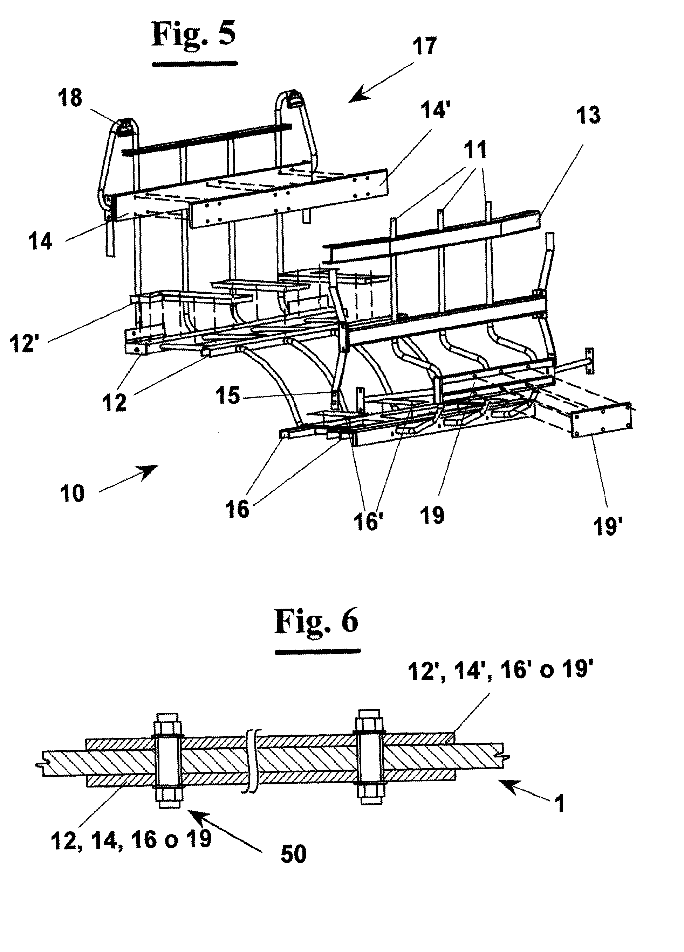

Cockpit 1 has at the seat, seat back and footplate, respective flattened portions 12", 14" and 16" where plates 12', 14' and 16' rest which, by means of bolts or rivets, are respectively connected to the transversal elements 12, 14 and 16. This way, the plastic material of the cockpit is sandwiched between the plates and the transversal elements, as shown in figure 6. In figure 5 plates 12', 14', 16' are shown separated from transversal elements 12, 14, and 16.

Furthermore, cross members 13 and 19 are provided near the front zone of cockpit 1 for reinforcing it. An extension 17 of shaped elements 11 is arranged at seat back 7 and provides connections 18 for fastening the seat belts to support structure 10.

The whole support structure 10 is made, for example, of aluminium for increasing the overall stiffness of the vehicle and dampening the vibrations without increasing substantially the weight, which is low and is a characteristic advantage of the invention.

Frame 20 comprises a rear portion 21 and a front portion 22; the latter is bent downwards with respect to the rear portion 21 for receiving the support structure 10. In particular, in the preferred embodiment shown in figure 3, front portion 22 is bent downwards to form a first step portion 23 at the seat 4 of cockpit 1 and a second step portion 24, which is lower than the first step portion and supports the footplate 3 of cockpit 1, after interposition of the support structure 10.

To rear portion 21 of frame 20 a charging platform can be associated, not shown, for carrying objects or people. A bumper (not shown) can be connected directly to step portion 24 of the front part 22 of frame 20.

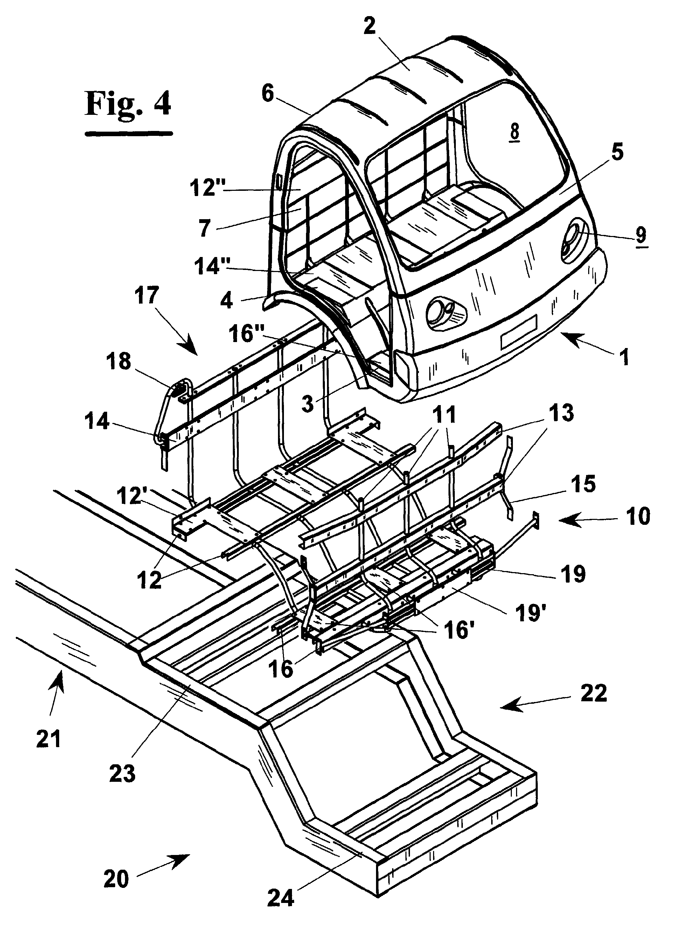

As shown in figure 4, support structure 10 is connected to frame 20 by screws, bolts, rivets or rubber bushing.

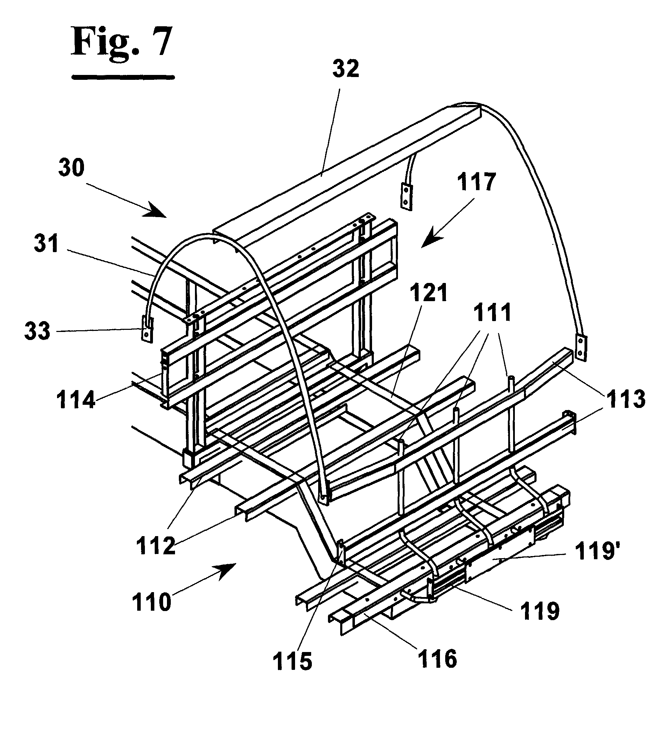

As shown in figure 7, an alternative embodiment 110 for support structure 10 of figure 2 provides longitudinally shaped elements 111 to which profiled rods 121 are associated. Similarly to support structure 10 of figure 2, an alternative support structure 110 has transversal stiffening elements 112, 114, 116, 119 at front part 5, seat 4 and seat back 7 of cockpit 1.

Furthermore, always in figure 7, a stiffening element 30 is shown for the upper part of cockpit 1, comprising two shaped curved elements 31, a cross member 32 and four plates 33 for fastening the reinforcement 30 to the support structure 110 by means of screws, bolts, etc.

Notwithstanding reference has been made to a cockpit for the sole front part of the vehicle, it is not excluded that the above concepts relate to a cockpit extended to all the vehicle, for example a car, a "van", etc.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Structure of car, **characterised in that it comprises** a cockpit made as a single part and of light material, a frame and a support structure arranged between said cockpit and said frame.

2. Structure of car, according to claim 1, wherein said support structure is integrated to said cockpit during production.

3. Structure of car, according to claim 1, wherein said single part cockpit is made of plastic material with a process of moulding, in particular rotational moulding, said single part cockpit comprising a roof, a footplate, at least a seat, a front face, a rear wall and two side walls as well as at least an opening for connecting the inside of the cockpit with the outside.

4. Structure of car, according to claim 3, wherein at least an of said apertures side is associated to a door, whereas the apertures that can be present on the front face and on the rear wall are arranged for receiving windows, a windscreen, lighting devices.

5. Structure of car, according to the previous claims, wherein said single part cockpit is made of polymeric thermoplastic material chosen among: polyethylene, polypropylene, PVC, polyamide, polycarbonate, polyurethane, PET, that can be mixed at moulding or overlapped as layers with reinforcing agents chosen among: foams, fibres, fillers.

6. Structure of car, according to claim 1, wherein said support structure arranged between said cockpit and said frame of the car has a reticular configuration comprising a plurality of metal shaped elements that extend along longitudinal planes to which metal transversal reinforcement means are respectively connected at the seat back, seat, footplate and front part of the cockpit.

7. Structure of car, according to claim 6, wherein said support structure arranged between said cockpit and said car frame has further metal longitudinal and transversal reinforcement means at the upper part of the cockpit.

8. Structure of car, according to claim 6, wherein said support structure engages with said cockpit and is connected to it by means of transversal elements, integral to said support structure and engaging with said cockpit from outside, associated to plate elements within said cockpit which is sandwiched between them.

9. Structure of car, according to the previous claims, wherein said support structure has fastening means for fastening at least a seat belt to said transversal reinforcement means.

10. Structure of car, according to claim 1, wherein said frame comprises a rear portion and a front portion, said front portion being bent downwards with respect to said rear portion for receiving said support structure; said front portion being bent downwards to form a first step portion at the seat of the cockpit and a second step portion lower than the first for supporting the footplate of the cockpit after interposition of said support structure.

11. Structure of car, according to the previous claims, wherein to said rear portion of said frame a charging rear platform is associated in combination to said cockpit for carrying objects or people.
